# EUROPÄISCHE PATENTSCHRIFT

(11) **EP 0 658 900 B1**
(45) Veröffentlichungstag und Bekanntmachung des Hinweises auf die Patenterteilung: **21.04.1999**
(21) Anmeldenummer: 94118965.6
(22) Anmeldetag: 01.12.1994
(51) Int. Cl.: G11B 33/00

(54) **Steckschloss mit Datenspeicher**
Lock with disk data storage
Serrure avec stockage de mémoire de données

(30) Priorität: 10.12.1993 DE 4342268
(43) Veröffentlichungstag der Anmeldung: 21.06.1995
(73) Patentinhaber: Siemens Nixdorf Informationssysteme AG, 33106 Paderborn (DE)
(72) Erfinder: Kamin, Hartmut, D-10585 Berlin (DE)
(74) Vertreter: Epping, Wilhelm, Dr.-Ing.

(56) Entgegenhaltungen:
- EP-A- 0 187 363
- DE-A- 3 515 106
- US-A- 5 019 812

## Beschreibung

Die Erfindung betrifft einen durch ein mechanisches Schloß gegen unbefugte Benutzung gesicherten Datenspeicher.

Aus der EP 0 500 051 A2 ist eine Einrichtung zum Sperren eines Aufnahmefaches für einen Datenträger, z.B. eine Diskette bekannt. Mit dieser Einrichtung ist es möglich, einen in einem Aufnahmefach eines Schreib-/Lesegerätes befindlichen Datenträger gegen unbefugte Entnahme zu sichern. Der Datenträger wird dazu in das Aufnahmefach eingelegt, und dann wird die Öffnung des Aufnahmefachs durch ein nur mit einem Schlüssel ver- und entriegelbares Abdeckelement verschlossen.

Mit der bekannten Einrichtung wird ein wirksamer Schutz gegen unbefugte Entnahme des Datenträgers erreicht, es ist jedoch kein Schutz gegen mißbräuchliches Auslesen oder Verändern der Daten möglich, weil der Datenträger auch ohne die Sperre benutzt werden kann. Dieser Schutz wird im allgemeinen durch zusätzliche Vergabe softwaretechnischer Schlüssel, wie Passworte und Benutzercodes - sogenannte User-ID - angestrebt. Elektronische oder programmtechnische Zugriffshindernisse können aber ohne Hinterlassen irgendwelcher Spuren überwunden werden.

Es ist daher die Aufgabe der Erfindung, einen Datenspeicher anzugeben, der sowohl gegen unbefugte Entnahme als auch gegen mißbräuchliches Auslesen oder Beschreiben geschützt ist. Die Aufgabe wird durch die Merkmale des Anspruchs 1 gelöst.

Durch die vorzugsweise unlösbare Verbindung des Datenspeichers mit dem Schloß wird sichergestellt, daß der Speicher nur beschrieben und ausgelesen werden kann, wenn der Verfügungsberechtigte diesen in dem Schreib-/Lesegerät festschließt. Gegenüber softwaretechnischen Schlüsseln hat ein mechanischer Schlüssel den Vorteil, daß sein Verlust und auch eine Manipulation an dem Schloß sofort bemerkt wird.

Der Datenspeicher ist vorzugsweise über eine galvanisch trennende Koppelvorrichtung beschreib- und/oder auslesbar. Die Koppelung kann dabei induktiv, kapazitiv, optoelektrisch oder durch Funkwellen erfolgen. Besonders das letztgenannte Kopplungsverfahren - der Datenspeicher ist dabei Teil eines Transponders - bietet den Vorteil der Ortbarkeit und des Speicherzugriffs auch über größere Entfernungen. Dieser Vorteil kommt insbesondere bei der Verwendung des erfindungsgemäßen Datenschlosses auf dem Transport- und Warenwirtschaftssektor zum Tragen, wie weiter unten noch dargelegt wird.

Das Datenschloß wird zum Betrieb des Speichers in eine Schloßaufnahme gesetzt. Diese gibt die Koppelvorrichtung oder zumindest einen Teil von ihr frei, so daß je nach Ausführung durch das Einsetzen des Schlosses in die Schloßaufnahme der volle Speicherinhalt oder ein Teil von ihm ausgelesen und/oder verändert werden kann.

Alternativ oder zusätzlich zur zumindest teilweisen Freigabe der Koppelvorrichtung durch die Schloßaufnahme kann dies auch durch den Schlüssel erfolgen, der dazu eingesteckt oder in bestimmte Stellungen gebracht oder abgezogen werden muß.

In einer Weiterbildung der Erfindung sind vorgebbare Übertragungskanäle oder Kombinationen von ihnen unterschiedlichen Schließstellungen des Schlosses oder der Schloßaufnahme zuzuordnen. Auch ist es möglich, die Zuordnung einzelner Übertragungskanäle oder Kombinationen von ihnen unterschiedlich privilegierten Schlüsseln zuzuordnen. So kann einem Individualschlüssel mit einer Schließung ein Kanal oder wenige Kanäle zugeordnet sein. Ein Gruppenschlüssel kann die Schließungen mehrerer Individualschlüssel und den Zugriff auf deren Kanäle und ggf. weitere Kanäle haben. Ein Hauptschlüssel schließlich kann die Privilegien aller Schlüssel haben. Die Schlüssel können entsprechend einer betrieblichen Hierarchie Sachbearbeitern, Gruppenleitern und Abteilungsleitern zugeordnet sein.

Das erfindungsgemäße Datenschloß ist besonders vorteilhaft auf dem Gebiet des Warentransports und der Warenwirtschaft einsetzbar. Beispielsweise kann ein Warenbesteller an den Lieferanten ein Datenschloß senden, in dessen Speicher seine Adresse und die Zahl und Art der zu liefernden Waren abgespeichert ist. Der Lieferant setzt das Schloß in die Schloßaufnahme eines Transportmittels, insbesondere eines Transportbehälters oder einer Transportpalette, ein. Dies kann ohne Schlüssel geschehen. Die von der Schloßaufnahme freigegebenen Übertragungskanäle erlauben das Auslesen der Bestelldaten, aber nicht deren Veränderung. Ein weiterer Kanal läßt das Einspeichern von tatsächlichen Liefermengen zu.

Bei Verwendung eines fernabfragbaren und -beschreibaren Transponders kann das Auslesen der Bestellung, das Heranfördern der Waren und das Einschreiben der bereitgestellten Warenmengen automatisch erfolgen. Der Stellplatz des Transportmittels kann durch Fernortung jederzeit ermittelt werden, so daß es von einem automatisch arbeitenden Fördersystem beschickt werden kann.

Das Datenschloß bleibt während des Transports mit dem Transportmittel verbunden. Letzteres ist mittels Fernortung und Fernauslesen des Speichers beim Empfänger der Waren jederzeit identifizier- und lokalisierbar. Zugleich können dem Speicher die Lieferdaten entnommen und verbucht werden. Nach dem Entladen des Transportmittels kann das Datenschloß mit Hilfe eines Schlüssels entnommen werden.

Die Verwendung des erfindungsgemäßen Datenschlosses mit einem Wertgutbehälter, insbesondere einer Geldkassette oder einer Registrierkassenlade, ist ebenfalls mit Vorteilen verbunden. Üblicherweise werden vom Leiter des Betriebsbüros vor Geschäftsbeginn solche Wertgutbehälter mit Wechselgeld befüllt an die Kassierpersonen ausgegeben. Dabei können sie mit einem Datenschloß versehen werden, in dessen Speicher der ausgehändigte Betrag und die Personalnummer der Kassierperson gespeichert ist. Vorteilhafterweise kann die Kassierperson den Wertgutbehälter mit ihrem Schlüssel öffnen, aber nicht das Schloß entnehmen. Dies ist nur dem Büroleiter möglich. In den Speicher sind bei Freigabe der entsprechenden Übertragungskanäle auch die Kassiervorgänge und die dabei vorgenommenen Geldbewegungen einspeicherbar. Diese Informationen dienen der Steuerung einer Abrechnungsvorrichtung bei einer späteren Kassenabrechnung.

Die Verwendung des erfindungsgemäßen Datenschlosses ist auch bei elektronischen Geräten, insbesondere der Datenverarbeitung, von Vorteil. Solche Geräte werden in zunehmendem Maße in Netzwerken betrieben. Es ist bereits Öfter vorgekommen, daß ein Eindringling in das Datennetz sich eine Benutzeridentifikation beschafft hat. Mit einem handelsüblichen PC konnte er dann leicht ein zum Betrieb im Netzwerk berechtigtes Gerät simulieren und unerlaubt Daten entnehmen oder manipulieren. Dies ist mit dem erfindungsgemäßen Datenschloß zu verhindern, wenn in dessen Speicher eine Information über die Identität des Gerätes gespeichert ist, die nur von einem das Netzwerk verwaltenden Rechner auslesbar ist. Ein unberechtigt im Netzwerk arbeitendes Gerät ist sofort an der fehlenden Identifikation erkennbar. Andererseits ist es einfach, ein Gerät z.B. nach einem Defekt durch ein anderes zu ersetzen, indem das Datenschloß mit Hilfe des Schlüssels aus dem zu entfernenden Gerät entnommen und in das andere Gerät eingesetzt wird.

Weitere Ausprägungen und vorteilhafte Weiterbildungen der Erfindung sind den Ansprüchen, der Beschreibung von Ausführungsbeispielen und der Zeichnung zu entnehmen. Es zeigt
- Fig 1a: Ein erstes Ausführungsbeispiel eines Steckschlosses mit angebautem Datenspeicher in Seitenansicht
- Fig 1b: Eine Rückansicht aus Fig. la entlang der Linie b-b
- Fig 2a: Eine geschnittene Seitenansicht einer Schloßaufnahme
- Fig 2b: Eine Vorderansicht der Schloßaufnahme aus Fig 2a
- Fig 3: Eine geschnittene Seitenansicht eines zweiten Ausführungsbeispiels eines Steckschlosses mit angebautem Datenspeicher.
- Fig 4: Eine geschnittene Seitenansicht eines dritten Ausführungsbeispiels eines Steckschlosses mit angebautem Datenspeicher, das in eine Schloßaufnahme eingesetzt ist.

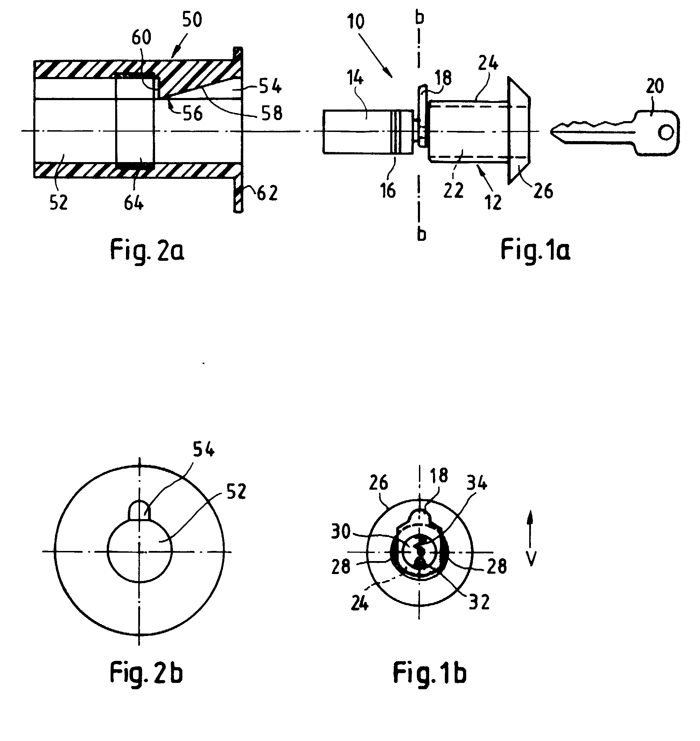

In Fig 1a ist ein aus einem Steckschloß 12 und einem daran angebauten zylindrischen Transponder 14 gebildetes Datenschloß allgemein mit 10 bezeichnet. Transponder mit einem Datenspeicher sind allgemein bekannt und müssen deshalb nicht näher beschrieben werden. Lediglich zum leichteren Verständnis der Arbeitsweise der weiter unten beschriebenen Schloßaufnahme sei erwähnt, daß Transponder allgemein eine elektrische Spule aufweisen, die dem Senden und Empfangen von Funkwellen dient. Eine solche konzentrisch angeordnete Spule 16 ist in Fig 1a symbolisch durch drei parallele Linien dargestellt.

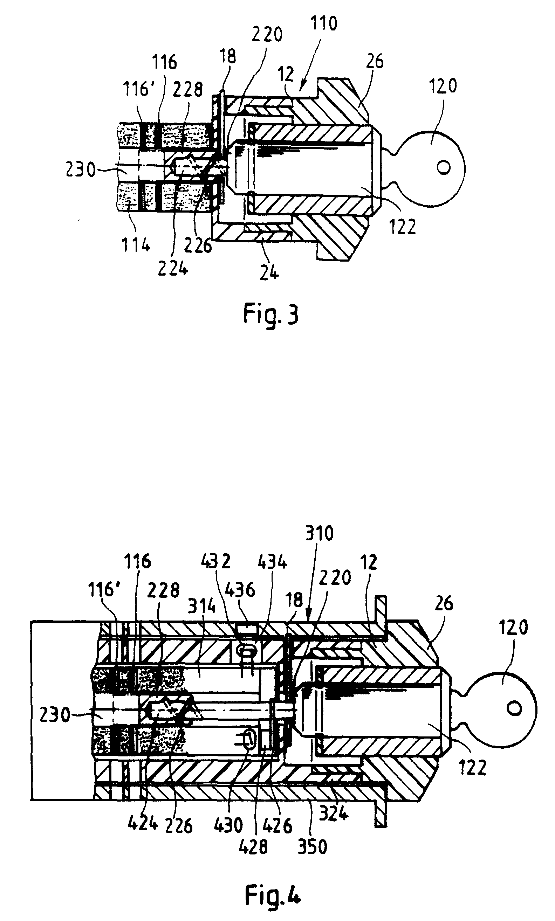

Um eine praktisch unlösbare Verbindung von Schloß und Transponder zu erreichen, sind verschiedene, in Fig 1a nicht dargestellte Maßnahmen möglich. Beispielsweise kann der Transponder um einen zum Schloß gehörenden Kern angeordnet und mit diesem vergossen werden. Auch kann das Zylindergehäuse, wie in Zusammenhang mit Fig 4 noch beschrieben wird, länger als in Fig 1a gezeigt ausgeführt werden, so daß es den Transponder im wesentlichen umfaßt. Damit sind Datenspeicher und Schloß ohne Zerstörung nicht voneinander lösbar. Durch Lücken in dem Gehäuse können die noch zu beschreibenden mechanischen und elektrischen Verbindungen hergestellt werden.

Das Steckschloß 12 besitzt ein plattenförmiges Riegelelement 18, das mit Hilfe eines Schlüssels 20 durch Drehen des Schließzylinders 22 um dessen Längsachse zwischen einer Entriegelungsstellung und einer Verriegelungsstellung verstellbar ist. Der Schließzylinder 22 ist in einem Zylindergehäuse 24 drehbar gelagert. Auf der Schlüsselseite ist an das Zylindergehäuse 24 eine Rosette 26 größeren Durchmessers angeformt.

Wie aus Fig 1b ersichtlich, ist das Riegelelement 18 zwischen an das Zylindergehäuse 24 angeformten Parallelführungen 28 verschieblich gehalten. Es weist eine Bohrung 30 auf, in der ein an die Rückseite des Schließzylinders 22 exzentrisch angeformter, parallel zur Schloßlängsachse sich erstreckender Zapfen 32 läuft. Eine Druckfeder 34 stützt sich einerseits an dem Schließzylinder 22 und andererseits an der Wand der Bohrung 30 so ab, daß sie das Riegelelement 18 in Richtung des Pfeils V vorspannt. Der Pfeil V weist zu der Verriegelungsstellung.

Fig 1b zeigt das Schloß 12 in seiner Entriegelungsstellung: Der Zapfen 32 drückt das Riegelelement 18 nach unten. Wird der Schließzylinder 22 um 180° gedreht, bewegt sich der Zapfen 32 in Richtung des Pfeils V, und die Druckfeder 34 schiebt das Riegelelement 18 in die Verriegelungsstellung.

Fig 2a zeigt die geschnittene Seitenansicht einer Schloßaufnahme 50. Diese weist einen Kanal 52 auf, dessen Querschnitt so bemessen ist, daß er das Zylindergehäuse 24 (Fig 1a) mit geringem radialem Spiel umfängt. An einer Stelle ist der Kanal 52 um eine parallel zur Mittellinie verlaufende Nut 54 erweitert. In die Nut 54 ist eine Riegelfalle 56 eingeformt, deren vordere Rampe 58 innerhalb der Nut 54 in einem flachen Winkel im Sinne einer allmählichen Verringerung der Nuttiefe ansteigt. In einem Abstand von der Vorderseite 62, der dem lichten Abstand zwischen Riegelelement 18 und Rosette 26 in Fig 1a entspricht, springt die Riegelfalle 56 senkrecht auf volle Nuttiefe zurück.

In den Kanal 52 der ansonsten aus einem elektrisch nicht leitenden Material hergestellten Schloßaufnahme 50 ist ein Dämpfungsring 64 aus Metall eingesetzt, der bei in die Schloßaufnahme 50 eingesetztem Datenschloß 10 einen Teil von dessen Spule 16 überdeckt und damit gegen die Funkwellen des Übertragungskanals abschirmt. Besteht die Spule 16 nämlich aus zwei antiparallel geschalteten gleichen Spulenhälften, so löschen sich ohne Dämpfung die Signale beider Spulenhälften aus. Durch die Dämpfung wird eine der beiden Spulenhälften deaktiviert, so daß nunmehr die Transponderfunktion freigegeben ist. Dieser Kanal ist also bei in die Schloßaufnahme eingesetztem Steckschloß frei.

Zum Einsetzen in die Schloßaufnahme 50 wird das in seine Verriegelungsstellung gebrachte Datenschloß 10 mit dem Transponder 14 voran in den Kanal 52 geschoben. Das Riegelelement 18 gleitet dabei an der Rampe 58 entlang und wird gegen die Kraft der Feder 34 zurückgeschoben. Wenn die Rosette 26 an der Vorderseite 62 der Schloßaufnahme 50 zu liegen kommt, springt das Riegelelement 18, angetrieben von der Feder 34, hinter die hintere Rampe 60 der Riegelfalle 56. Das Datenschloß 10 ist damit gegen Entnahme gesichert. Erst nachdem mit Hilfe des Schlüssels 20 das Riegelelement 18 in seine zurückgezogene Entriegelungsstellung gebracht wurde, kann das Datenschloß 10 aus der Schloßaufnahme entnommen werden.

Fig 3 zeigt ein zweites Ausführungsbeispiel eines Datenschlosses 110 nach der Erfindung. Alle Teile, die mit denen des ersten Ausführungsbeispiels 10 übereinstimmen, sind mit gleichen Bezugszeichen versehen. Da die Betätigung des Riegelelements 18 in gleicher Weise wie bei dem ersten Ausführungsbeispiel erfolgt, ist dieses nicht in allen Einzelheiten dargestellt.

An die Hinterseite 220 des Schließzylinders 122 ist konzentrisch ein Zapfen 224 mit einem Transportgewinde 226 angeformt. Der Zapfen 224 ist in einen Dämpfungskern 228 eingeschraubt, der in einer Mittelausnehmung 230 eines Transponders 114 verdrehsicher gelagert ist. Der Dämpfungskern 228 kann abhängig von der Frequenz der für die Koppelung verwendeten Funkwellen aus Kupfer oder auch aus einem gesinterten Ferritmaterial bestehen.

Der Transponder 114 weist zwei konzentrische Spulen 116, 116' auf, deren jede der Kopplung eines Übertragungskanals dient. Es ist leicht ersichtlich, daß die Konstruktion des Transponders auch mehr als zwei Spulen zuläßt.

Wird der Schlüssel 120 gedreht, so wird der Dämpfungskern 228 von dem Transportgewinde 226 in der Mittelausnehmung 230 entlang der Mittellinie bewegt. Dabei taucht er nacheinander in die Spulen 116, 116' ein und bedämpft diese so stark, daß der jeweils zugeordnete Übertragungskanal gesperrt wird. Da der Transportweg des Dämpfungskerns 228 vom Verdrehwinkel des Schlüssels 120 abhängt, sind unterchiedlichen Schließstellungen des Schließzylinders 122 unterschiedliche Spulen zugeordnet. In Fig 3 ist mit durchgezogener Linie die Position des Dämpfungskerns 228 dargestellt, in der alle Kanäle freigegeben sind. Die strichpunktiert gezeigte Position zeigt die Sperrung aller Kanäle, in einer nicht dargestellten Zwischenstellung wäre nur die Spule 116 bedämpft, Spule 116' hingegen freigegeben. Die verschiedenen Schließstellungen können unterschiedlich privilegierten Schlüsseln zugeordnet werden.

Durch geeignete Ausgestaltung des Transportgewindes 226 und des Antriebs für den Riegel 18 kann erreicht werden, daß der der Spule 116 entsprechende Kanal in der Entriegelungsstellung des Schlosses gesperrt ist und durch Schlüsselbetätigung freizugeben ist.

Das Datenschloß 110 ist in die Schloßaufnahme 50 einsetzbar. Ein daran befindlicher Dämpfungsring 64 kann dabei einen an sich durch einen Schlüssel freigebbaren Übertragungskanal sperren, so daß Schlüsselprivilegien abhängig vom Einsatzfall des Schlosses aufgehoben werden können.

Fig 4 zeigt ein drittes Ausführungsbeispiel eines Datenschlosses 310, das in eine Schloßaufnahme 350 eingesetzt ist. Alle Teile, die mit denen des zweiten Ausführungsbeispiels 110 übereinstimmen, sind mit gleichen Bezugszeichen versehen. Die Funktionsweise der Schloßmechanik, der Spulen 116, 116' und des Dämpfungskerns 228 entspricht der des Ausführungsbeispiels nach Fig 3 und wird deshalb nicht mehr beschrieben.

Das Zylindergehäuse 324 ist über das Riegelelement 18 hinaus so weit verlängert, daß es den Transponder 314 umschließt. Ohne Zerstörung des Zylindergehäuses ist der Transponder 314 also nicht vom Steckschloß 12 lösbar.

Mit dem Zapfen 424 ist ein Schwenkarm 426 drehfest verbunden, auf dem ein Permanentmagnet 428 befestigt ist. In der in Fig 4 gezeigten Grundstellung des Schlosses steht der Permanentmagnet 428 einem Reedkontakt 430 gegenüber, so daß dieser geöffnet ist. Damit ist die Stromversorgung des Transponders 314 unterbrochen, sein Speicher kann also weder ausgelesen noch beschrieben werden. Dies wird erst möglich, wenn der Permanentmagnet 428 durch Drehen des Schlüssels 120 von dem Reedkontakt 430 weggeschwenkt wird.

An dem Transponder 314 ist ein zweiter Reedkontakt 432 angeordnet, der in eine Ausnehmung 434 im Zylindergehäuse 324 hineinragt. Bei in die Schloßaufnahme 350 eingesetztem Datenschloß kommt der zweite Reedkontakt 432 unmittelbar neben einem zweiten Permanentmagneten 436 zu liegen, der in die Schloßaufnahme 350 eingebaut ist. Damit wird der zweite Reedkontakt 432 geschlossen. Die Schaltfunktion dieses Kontaktes entspricht dabei der des ersten Reedkontaktes 430.

Beide Reedkontakte 430, 432 können elektrisch in Serie geschaltet sein. Dann ist der Transponder 314 nur betriebsbereit, wenn das Datenschloß 310 in die Schloßaufnahme 350 eingesetzt ist und der Schlüssel 120 aus seiner Grundstellung herausgedreht wurde. Es kann auch nur der zweite Reedkontakt 432 vorgesehen sein; dann wird der Transponder unabhängig von dem Schlüssel durch Einsetzen in die Schloßaufnahme 350 betriebsbereit. Durch die Betriebsbereitschaltung des Transponders wird der mißbräuchliche Zugriff zu dem Datenspeicher weiter erschwert und zugleich eine eventuell im Transponder angeordnete Batterie geschont.

## Patentansprüche

1. Zum Einsetzen in eine Schloßaufnahme (50) bestimmtes Steckschloß (12) mit einem mit diesem betriebsmäßig fest verbundenen, beschreib- und/oder auslesbaren Datenspeicher, wobei das Steckschloß (12) und der Datenspeicher ein Datenschloß (10, 110, 310) bilden und wobei wenigstens eine mit dem Steckschloß (12) zusammenwirkende Freigabeeinrichtung (64; 224, 228; 428, 430) den Zugriff auf den Datenspeicher zuläßt oder verhindert.

2. Datenschloß nach Anspruch 1, **dadurch gekennzeichnet**, daß der Datenspeicher ohne dessen oder des Steckschlosses (12) Zerstörung nicht von dem Steckschloß (12) lösbar ist.

3. Datenschloß nach Anspruch 1 oder 2, **dadurch gekennzeichnet**, daß der Datenspeicher über eine galvanisch trennende Koppelvorrichtung mit einem oder mehreren Übertragungskanälen beschreib- und/oder auslesbar ist, wobei unterschiedlichen Übertragungskanälen unterschiedliche Speicherbereiche und /oder unterschiedliche Zugriffsprivilegien (Auslesen, Verändern des Speicherinhalts) zugeordnet sind.

4. Datenschloß nach Anspruch 3, **dadurch gekennzeichnet**, daß der Datenspeicher und die Koppelvorrichtung Teile eines an sich bekannten, mit Funkwellen als Übertragungsmedium arbeitenden Transponders (14, 114, 314) sind, wobei jedem Übertragungskanal eine Koppelspule (16; 116, 116') zugeordnet ist.

5. Datenschloß nach Anspruch 4, **dadurch gekennzeichnet,** daß die Koppelspule aus zwei antiparallel geschalteten Wicklungen besteht und daß wenigstens ein Übertragungskanal durch Einsetzen des Datenschlosses (10) in eine Schloßaufnahme (50) freigebbar ist, wobei die Freigabe durch an der Schloßaufnahme (50) angeordnete Dämpfungsmittel (64) erfolgt, die eine der Wicklungen bedämpfen.

6. Datenschloß nach Anspruch 3 oder 4, **dadurch gekennzeichnet,** daß wenigstens ein Übertragungskanal durch Einstecken des Datenschlosses (10) in eine Schloßaufnahme (50) sperrbar ist, wobei die Sperrung durch an der Schloßaufnahme (50) angeordnete Sperrmittel (64) erfolgt.

7. Datenschloß nach einem der Ansprüche 3 bis 6, **dadurch gekennzeichnet,** daß wenigstens ein Übertragungskanal durch Einstecken eines Schlüssels (120) in den Schließkanal des Steckschlosses (12) und/oder durch Drehen des Schlüssels in eine von wenigstens zwei Schließstellungen oder durch Abziehen des Schlüssels aus dem Schließkanal freigegeben wird, wobei die Freigabe durch die Lageveränderung am Schließzylinder (122) angeordneter Sperrmittel (228) erfolgt.

8. Datenschloß nach Anspruch 7, **dadurch gekennzeichnet**, daß vorgebbare Kombinationen freizugebender Übertragungskanäle unterschiedlichen Schließstellungen zugeordnet sind.

9. Datenschloß nach Anspruch 7 oder 8, **dadurch gekennzeichnet,** daß vorgebbare Kombinationen freizugebender Übertragungskanäle unterschiedlich privilegierten Schlüsseln zugeordnet sind.

10. Datenschloß nach einem der Ansprüche 7 bis 9, **dadurch gekennzeichnet**, daß am schlüsselfernen Ende (220) des Schließzylinders (122) ein mit einem Transportgewinde (226) versehender Zapfen (224, 424) angeordnet ist, der bei Betätigung des Schlüssels (120) die Lage eines Sperrmittels (228) relativ zu der Koppelvorrichtung (116, 116') verändert.

11. Datenschloß nach einem der Ansprüche 4 bis 10, **dadurch gekennzeichnet,** daß in den Transponder (314) ein Reedkontakt (430) eingebaut ist, der durch einen gegenüber diesem in seiner Lage veränderbaren Permanentmagneten (428) betätigbar ist, wobei dessen Lageveränderung durch Betätigen des Steckschlosses (12) bewirkt wird.

12. Datenschloß nach einem der Ansprüche 4 bis 11, wobei das Datenschloß (310) in eine Schloßaufnahme (350) einsetzbar ist, **dadurch gekennzeichnet,** daß in dem Transponder (314) ein Reedkontakt (432) eingebaut ist, der durch einen mit der Schloßaufnahme (350) verbundenen Permanentmagneten (436) betätigbar ist.

13. Datenschloß nach einem der Ansprüche 1 bis 12, **dadurch gekennzeichnet,** daß es ohne Benutzung eines Schlüssels in eine Schloßaufnahme (50) einsetzbar, jedoch nur unter Benutzung des zugeordneten Schlüssels (20, 120) aus dieser entnehmbar ist.

14. Datenschloß nach Anspruch 13, **dadurch gekennzeichnet,** daß das Steckschloß (12) ein von der Kraft einer Feder (34) in seiner Verriegelungsstellung beaufschlagtes Riegelelement (18) enthält, das durch Betätigen des Schlüssels (20, 120) entgegen der Federkraft in seine Entriegelungsstellung bringbar ist.

15. Anordnung nach Anspruch 13 oder 14, **dadurch gekennzeichnet,** daß die Schloßaufnahme (50) eine Riegelfalle (56) aufweist, deren zu der Einsteckseite für das Datenschloß (10) weisende Rampe (58) flach ansteigt und deren rückwärtige Rampe (60) im wesentlichen senkrecht zurückspringt, und daß das Riegelelement (18) bei in die Schloßaufnahme (50) eingeschobenem Datenschloß (10) die rückwärtige Rampe (60) hintergreift.

16. Anordnung nach einem der Ansprüche 1 bis 15, **dadurch gekennzeichnet,** daß eine Schloßaufnahme (50) an einer Transportpalette oder einem Transportbehälter angebracht ist und der Datenspeicher Informationen über das Transportgut und/oder dessen Eigentümer enthält, und daß diese Informationen zur Steuerung der Benutzung oder des Transports der Palette bzw. des Behälters dienen.

17. Anordnung nach einem der Ansprüche 1 bis 15, **dadurch gekennzeichnet,** daß eine Schloßaufnahme (50) an einem Wertgutbehälter, insbesondere einer Geldkassette oder einer Registrierkassenlade angebracht ist und der Datenspeicher Informationen über den Inhalt des Wertgutbehälters und/oder die dafür verantwortliche(n) Person(en) enthält und daß diese Informationen zur Steuerung einer Abrechnungsvorrichtung dienen.

18. Anordnung nach einem der Ansprüche 1 bis 15, **dadurch gekennzeichnet**, daß eine Schloßaufnahme (50) an einem elektronischen Gerät, insbesondere einem Personal Computer, einer Work Station oder einer elektronischen Registrierkasse angebracht ist und der Datenspeicher Informationen enthält die zur Feststellung einer Identität und/oder Autorisierung verwendet werden.

## Claims

1. Insertable lock (12) intended to be inserted into a lock receptacle (50), with a writable and/or readable data store firmly connected operatively to the said lock, the insertable lock (12) and the data store forming a data lock (10, 110, 310), and at least one enabling device (64; 224, 228; 428, 430), which cooperates with the insertable lock (12), allowing or preventing access to the data store.

2. Data lock according to Claim 1, characterized in that the data store cannot be released from the insertable lock (12), without the said data store or insertable lock (12) being destroyed.

3. Data lock according to Claim 1 or 2, characterized in that the data store is writable and/or readable via an electrically isolating coupling device having one or more transmission channels, different transmission channels being assigned different storage regions and/or different access privileges (read-out, modification of storage content).

4. Data lock according to Claim 3, characterized in that the data store and the coupling device are parts of a transponder (14, 114, 314) known per se and operating with radio waves as a transmission medium, each transmission channel being assigned a coupling coil (16; 116, 116').

5. Data lock according to Claim 4, characterized in that the coupling coil consists of two antiparallel-connected windings, and in that at least one transmission channel can be enabled by the insertion of the data lock (10) into a lock receptacle (50), enabling taking place as a result of damping means (64) which are arranged on the lock receptacle (50) and which damp one of the windings.

6. Data lock according to Claim 3 or 4, characterized in that at least one transmission channel can be blocked by the insertion of the data lock (10) into a lock receptacle (50), blocking taking place as a result of blocking means (64) arranged on the lock receptacle (50).

7. Data lock according to one of Claims 3 to 6, characterized in that at least one transmission channel is enabled by the insertion of a key (120) into the keyway of the insertable lock (12) and/or by the rotation of the key into one of at least two locking positions or by the withdrawal of the key from the keyway, enabling taking place as a result of the change in position of blocking means (228) arranged on the lock cylinder (122).

8. Data lock according to Claim 7, characterized in that predeterminable combinations of transmission channels to be enabled are assigned to different locking positions.

9. Data lock according to Claim 7 or 8, characterized in that predeterminable combinations of transmission channels to be enabled are assigned to differently privileged keys.

10. Data lock according to one of Claims 7 to 9, characterized in that a pin (224, 424) having a transport thread (226) is arranged at that end (220) of the lock cylinder (122) which is remote from the key, the said pin changing the position of a blocking means (228) relative to the coupling device (116, 116') when the key (120) is actuated.

11. Data lock according to one of Claims 4 to 10, characterized in that a reed contact (430) is built into the transponder (314), the said reed contact being capable of being actuated by a permanent magnet (428), the position of which can be changed relative to the said reed contact, the change in position of the said permanent magnet being caused by the actuation of the insertable lock (12).

12. Data lock according to one of Claims 4 to 11, the data lock (310) being capable of being inserted into a lock receptacle (350), characterized in that a reed contact (432) is built into the transponder (314), the said reed contact being capable of being actuated by a permanent magnet (436) connected to the lock receptacle (350).

13. Data lock according to one of Claims 1 to 12, characterized in that it can be inserted into a lock receptacle (50) without the use of a key, but can be extracted from the said lock receptacle only by the use of the associated key (20, 120).

14. Data lock according to Claim 13, characterized in that the insertable lock (12) contains a bolt element (18) which, in its locking position, is loaded by the force of a spring (34) and which can be brought into its unlocking position, counter to the spring force, as a result of the actuation of the key (20, 120).

15. Arrangement according to Claim 13 or 14, characterized in that the lock receptacle (50) has a bolt latch (56), of which the ramp (58) facing the insertion side for the data lock (10) ascends at a low inclination and of which the rearward ramp (60) is set back essentially vertically, and in that the bolt element (18) engages behind the rearward ramp (60) when the data lock (10) is pushed into the lock receptacle (50).

16. Arrangement according to one of Claims 1 to 15, characterized in that a lock receptacle (50) is mounted on a transport pallet or a transport container and the data store contains information on the transported product and/or its owner, and in that this information serves for controlling the use or transport of the pallet or container.

17. Arrangement according to one of Claims 1 to 15, characterized in that a lock receptacle (50) is mounted on a valuables container, in particular a money cassette or a cash-register drawer, and the data store contains information on the content of the valuables container and/or the person or persons responsible for it, and in that this information serves for controlling an accounting device.

18. Arrangement according to one of Claims 1 to 15, characterized in that a lock receptacle (50) is mounted on an electronic appliance, in particular a personal computer, a workstation or an electronic cash-register, and the data store contains information which is used to establish identity and/or authorization.

## Revendications

1. Serrure à enficher (12) destinée à être placée dans un logement de serrure (50) et comportant une mémoire de données dont le fonctionnement, pour l'écriture et/ou la lecture, est lié à la liaison avec cette serrure, la serrure à enficher (12) et la mémoire de données formant une serrure de données (10, 110, 310) et au moins un dispositif de dégagement (64; 224, 228; 428, 430) qui coopère avec la serrure à enficher (12) autorisant ou interdisant l'accès à la mémoire de données.

2. Serrure de données selon la revendication 1, caractérisée par le fait que la mémoire de données n'est pas séparable de la serrure à enficher (12) sans être détruite ou sans détruire la serrure à enficher (12).

3. Serrure de données selon la revendication 1 ou 2, caractérisée par le fait que la mémoire de données peut être écrite et/ou lue par l'intermédiaire d'un dispositif de couplage à isolation galvanique ayant un ou plusieurs canaux de transmission, des zones de mémoire différentes et/ou des privilèges d'accès différents (lecture, modification du contenu de la mémoire) étant associés à des canaux de transmission différents.

4. Serrure de données selon la revendication 3, caractérisée par le fait que la mémoire de données et le dispositif de couplage font partie d'un transpondeur (14, 114, 314) connu en soi et fonctionnant avec des ondes radio comme moyen de transmission, une bobine de couplage (16; 116, 116') étant associée à chaque canal de transmission.

5. Serrure de données selon la revendication 4, caractérisée par le fait que la bobine de couplage est constituée de deux enroulements en montage tête-bêche et qu'au moins un canal de transmission peut être dégagé par le placement de la serrure de données (10) dans un logement de serrure (50), le dégagement s'effectuant par des moyens d'affaiblissement (64) qui sont montés sur le logement de serrure (50) et qui affaiblissent l'un des enroulements.

6. Serrure de données selon la revendication 3 ou 4, caractérisée par le fait qu'au moins un canal de transmission peut être bloqué par le placement de la serrure de données (10) dans un logement de serrure (50), le blocage s'effectuant par des moyens de blocage (64) qui sont montés sur le logement de serrure (50).

7. Serrure de données selon l'une des revendications 3 à 6, caractérisée par le fait qu'au moins un canal de transmission est dégagé par l'introduction d'une clé (120) dans le canal de fermeture de la serrure à enficher (12) et/ou par la rotation de la clé dans l'une des - au moins - deux positions de fermeture ou par le retrait de la clé du canal de fermeture, le dégagement s'effectuant par la modification de la position des moyens de blocage (228) montés sur le cylindre de fermeture (122).

8. Serrure de données selon la revendication 7, caractérisée par le fait que des combinaisons, pouvant être prescrites, de canaux de transmission à dégager sont associées à des positions de fermeture différentes.

9. Serrure de données selon la revendication 7 ou 8, caractérisée par le fait que des combinaisons, pouvant être prescrites, de canaux de transmission à dégager sont associées à des clés ayant des privilèges différents.

10. Serrure de données selon l'une des revendications 7 à 9, caractérisée par le fait que, à l'extrémité (220), opposée à la clé, du cylindre de fermeture (122), il est agencé un tenon (224, 424) qui est muni d'un filetage de transport (226) et qui modifie lors de l'actionnement de la clé (120) la position d'un moyen de blocage (228) relativement au dispositif de couplage (116, 116').

11. Serrure de données selon l'une des revendications 4 à 10, caractérisée par le fait qu'il est monté dans le transpondeur (314) un contact Reed (430) qui peut être actionné par un aimant permanent (428) dont la position par rapport à ce contact Reed peut être modifiée et dont cette modification de position est provoquée par l'actionnement de la serrure à enficher (12).

12. Serrure de données selon l'une des revendications 4 à 11, la serrure de données (310) pouvant être placée dans un logement de serrure (350), caractérisée par le fait qu'il est monté dans le transpondeur (314) un contact Reed (432) qui peut être actionné par un aimant permanent (436) lié au logement de serrure (350).

13. Serrure de données selon l'une des revendications 1 à 12, caractérisée par le fait qu'elle peut être placée sans utiliser de clé dans un logement de serrure (50) mais qu'elle peut en être retirée seulement en utilisant la clé associée (20, 120).

14. Serrure de données selon la revendication 13, caractérisée par le fait que la serrure à enficher (12) comporte un élément de verrouillage (18), qui est soumis dans sa position verrouillée à la force d'un ressort (34) et qui peut être amené dans sa position déverrouillée par un actionnement de la clé (20, 120) à l'encontre de la force du ressort.

15. Dispositif selon la revendication 13 ou 14, caractérisé par le fait que le logement de serrure (50) comporte une clenche (56), dont la rampe (58) pointant vers le côté d'introduction pour la serrure de données (10) monte doucement et dont la rampe arrière (60) revient sensiblement perpendiculairement, et que l'élément de verrouillage (18) s'accroche derrière la rampe arrière (60) lorsque la serrure de données (10) est introduite dans le logement de serrure (50).

16. Dispositif selon l'une des revendications 1 à 15, caractérisé par le fait qu'un logement de serrure (50) est monté sur une palette de transport ou sur un conteneur, que la mémoire de données contient des informations concernant la marchandise transportée et/ou le propriétaire de celle-ci et que ces informations servent à la commande de l'utilisation ou du transport de la palette ou du conteneur.

17. Dispositif selon l'une des revendications 1 à 15, caractérisé par le fait qu'un logement de serrure (50) est monté sur un conteneur d'objets de valeur, notamment un coffre d'argent ou une caisse enregistreuse, que la mémoire de données contient des informations concernant le contenu du conteneur d'objets de valeur et/ou la ou les personnes qui en sont responsables et que ces informations servent à la commande d'un dispositif de tenue des comptes.

18. Dispositif selon l'une des revendications 1 à 15, caractérisé par le fait qu'un logement de serrure (50) est monté sur un appareil électronique, notamment un ordinateur personnel, un poste de travail ou une caisse enregistreuse électronique, et que la mémoire de données contient des informations qui sont utilisées pour la vérification d'une identité et/ou d'une autorisation.
